(19) Europäisches Patentamt
European Patent Office
Office européen des brevets

(11) **EP 3 582 144 B1**

(12) **EUROPEAN PATENT SPECIFICATION**

(45) Date of publication and mention
of the grant of the patent:
**13.11.2024 Bulletin 2024/46**

(21) Application number: **18750641.5**

(22) Date of filing: **02.02.2018**

(51) International Patent Classification (IPC):
*G06N 7/01* (2023.01)   *G06N 20/00* (2019.01)
*G06F 18/22* (2023.01)   *G06F 18/25* (2023.01)
*G06N 5/01* (2023.01)   *G06V 10/772* (2022.01)
*G06V 10/778* (2022.01)   *G06V 10/80* (2022.01)
*G06V 10/774* (2022.01)   *G06V 10/74* (2022.01)

(52) Cooperative Patent Classification (CPC):
**G06N 20/00; G06F 18/22; G06F 18/256;
G06N 5/01; G06V 10/761; G06V 10/772;
G06V 10/774; G06V 10/7788; G06V 10/811;
G06N 7/01**

(86) International application number:
**PCT/CN2018/075114**

(87) International publication number:
**WO 2018/145604 (16.08.2018 Gazette 2018/33)**

(54) **SAMPLE SELECTION METHOD, APPARATUS AND SERVER**

PROBENAUSWAHLVERFAHREN, VORRICHTUNG UND SERVER

PROCÉDÉ, APPAREIL ET SERVEUR DE SÉLECTION D'ÉCHANTILLONS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD TN**

(30) Priority: **08.02.2017 CN 201710069595**

(43) Date of publication of application:
**18.12.2019 Bulletin 2019/51**

(73) Proprietors:
• **Nanjing University of Aeronautics and
Astronautics
Nanjing, Jiangsu 210016 (CN)**
• **Tencent Technology (Shenzhen) Company
Limited
Shenzhen, Guangdong, 518057 (CN)**

(72) Inventors:
• **HUANG, Shengjun
Jiangsu 210016 (CN)**
• **GAO, Nengneng
Jiangsu 210016 (CN)**
• **YUAN, Kun
Shenzhen, Guangdong 518057 (CN)**
• **CHEN, Wei
Shenzhen, Guangdong 518057 (CN)**
• **WANG, Di
Shenzhen, Guangdong 518057 (CN)**

(74) Representative: **Eisenführ Speiser
Patentanwälte Rechtsanwälte PartGmbB
Postfach 31 02 60
80102 München (DE)**

(56) References cited:
CN-A- 103 049 526        CN-A- 105 930 873
CN-A- 106 095 893        US-A1- 2010 299 144
US-A1- 2011 072 012

- CUICUI KANG ET AL: "Cross-Modal Similarity Learning", CONFERENCE ON INFORMATION AND KNOWLEDGE MANAGEMENT, ACM, 2 PENN PLAZA, SUITE 701 NEW YORK NY 10121-0701 USA, 17 October 2015 (2015-10-17), pages 1251 - 1260, XP058076659, ISBN: 978-1-4503-3794-6, DOI: 10.1145/2806416.2806469
- YAN YAN ET AL: "Image Classification by Cross-Media Active Learning With Privileged Information", IEEE TRANSACTIONS ON MULTIMEDIA, IEEE SERVICE CENTER, US, vol. 18, no. 12, December 2016 (2016-12-01), pages 2494 - 2502, XP011634454, ISSN: 1520-9210, [retrieved on 20161115], DOI: 10.1109/TMM.2016.2602938

**Description**

This application claims priority to Chinese Patent Application No. 201710069595.X, entitled "SAMPLE SELECTION METHOD AND APPARATUS" and filed with the China National Intellectual Property Administration on February 8, 2017.

**FIELD**

The present disclosure relates to the field of metric learning technologies, and in particular, to a sample selection method, a sample selection apparatus and a server.

**BACKGROUND**

Metric learning means automatically learning, from a sample pair which is labeled based on a correlation, a distance metric that properly describes a semantic similarity between two objects, and is a machine learning technology commonly used in the field of image retrieval.

Currently, there have been some mature technologies related to metric learning. However, most of the technologies aim at a correlation metric between single-modality data (for example, an image and another image), and are not applicable to a correlation metric between cross-modality data (for example, an image and text). In conventional metric learning for the cross-modality data, a training sample set is established in advance. The training sample set includes a large number of training samples. Each training sample includes a sample pair which is labeled based on a correlation. Then the training sample set is used to train a metric model. The metric model is used for measuring a correlation between a set of cross-modality data. The training sample set is generally established by randomly selecting a sample pair from an unlabeled sample set as training samples, and labeling, by a labeling personnel, the sample pair based on a correlation of the selected training samples.

In the conventional technology, the randomly selected training samples have poor quality, resulting in relatively low accuracy of a final metric model obtained through training. In addition, a large number of training samples which are labeled based on correlations are required for training a metric model. Consequently, the model is trained at a low efficiency. In addition, labeling of the training samples is time consuming and costly.

**SUMMARY**

A sample selection method, a sample selection apparatus, and a server are provided according US 2011/0072012 A1 discloses an apparatus and method that facilitate combined query based searching with serendipitous browsing in a multimedia collection. A user selects objects to label from a local map, which may include representations of objects retrieved from the collection as being responsive to a text or image base query. The text and image portions of the object can be independently labeled. Unlabeled objects are scored and ranked based on the applied labels of labeled objects, which may take into account cross-media pseudo-relevance and user selectable (or default) parameters, such as a forgetting factor, which tends to place greater weight on more recently labeled objects, and a modality parameter, which places greater weight on the modality (text, image, or hybrid) currently selected by the user. The local map is modified, based on the ranking, optionally after reranking of objects to improve the diversity of the displayed objects.

**SUMMARY**

A method and an apparatus for cross-modality data retrieval, and a server are provided according to the embodiments of the present disclosure. A metric model obtained through training by using a training sample set is used for retrieval cross-modality data, to resolve problems of the low accuracy of the metric model for cross-modality data retrieval, the low efficiency in training the metric model, and the time consuming and costly labeling of training samples for training the metric model in the conventional technology. The following technical solutions are provided.

According to one aspect, a method for retrieving cross-modality data is provided, the method is applied to a server, and includes:

(i) acquiring a training sample set by:

selecting n sample pairs from an unlabeled sample set, each sample pair including two samples, each sample including data in p modalities, n being a positive integer, and p being an integer greater than 1, wherein the data in the p modalities is data of different data types, which include an image and text, an audio and text, a video and text, or an image and an audio, or wherein the data in the p modalities is data of different data content, which includes blood pressure data, blood glucose data, electrocardiogram data, and/or weight data;

calculating a partial similarity between data in each modality of one sample and data in each modality of the other sample included in each of the n sample pairs, to obtain p×p partial similarities, the calculated p×p partial similarities including p similarities between data in same modalities and p×p-p similarities between cross-modality data;

calculating, based on the p×p partial similarities, an overall similarity between the two samples included in the sample pair;

obtaining a degree of difference between the p×p partial similarities and the overall similarity; and

selecting a training sample from a sample pair that meets a preset condition among the n sample pairs, the preset condition including that the degree of difference is greater than a first threshold and the overall similarity is less than a second threshold,

obtaining a correlation corresponding to the training sample that is labeled by a labeling personnel, the correlation being used for indicating whether two samples comprised in the training sample are correlated, and

adding the training sample to a training sample set,

(ii) training a metric model by using the training sample set, the metric model being used for measuring a correlation between two objects, each object comprising data in at least one of the p modalities, the metric model M including p×p metric sub-models, each metric sub-model being used for calculating a partial similarity for a feature of data in a modality of one object and a feature of data in a modality of the other object, and

(iii) retrieving the cross-modality data by:

receiving retrieval information entered by a user, the retrieval information comprising data in one of the p modalities, and

retrieving, based on the retrieval information entered by the user and using the metric model, cross-modality data comprising data in another one of the p modalities,

(iv) providing a retrieval result to the user.

According to another aspect, an apparatus for retrieving cross-modality data is provided, the apparatus is applied to a server, and includes:

(i) an acquiring unit, configured to acquire a training sample set, comprising:

a selection module, configured to select n sample pairs from an unlabeled sample set, each sample pair including two samples, each sample including data in p modalities, n being a positive integer, and p being an integer greater than 1, wherein the data in the p modalities is data of different data types, which include an image and text, an audio and text, a video and text, or an image and an audio, or wherein the data in the p modalities is data of different data content, which includes blood pressure data, blood glucose data, electrocardiogram data, and/or weight data;

a first calculation module, configured to calculate a partial similarity between data in each modality of one sample and data in each modality of the other sample included in each of the n sample pairs, to obtain p×p partial similarities, the calculated p×p partial similarities including p similarities between data in same modalities and p×p-p similarities between cross-modality data;

a second calculation module, configured to calculate, based on the p×p partial similarities, an overall similarity between the two samples included in the sample pair;

a third calculation module, configured to obtain a degree of difference between the p×p partial similarities and the overall similarity;

a selection module, configured to select a training sample from a sample pair that meets a preset condition among the n sample pairs, the preset condition including that the degree of difference is greater than a first threshold and the overall similarity is less than a second threshold,

an obtaining module, configured to obtain a correlation corresponding to the training sample that is labeled by a labeling personnel, the correlation being used for indicating whether two samples comprised in the training sample are correlated;

an addition module, configured to add the training sample to a training sample set; and

(ii) a training module, configured to train the metric model by using the training sample set, the metric model being used for measuring a correlation between two objects, each object comprising data in at least one of the p modalities, the metric model including p×p metric sub-models, each metric sub-model being used for calculating a partial similarity for a feature of data in a modality of one object and a feature of data in a modality of the other object, and

(iii) a retrieval unit, configured to retrieve the cross-modality data, comprising:

a reception unit, configured to receive retrieval information entered by a user, the retrieval information comprising data in one of the p modalities,

a retrieval module, configured to retrieve, based on the retrieval information entered by the user and using the metric model, cross-modality data comprising data in another one of the p modalities,

(iv) a providing unit, configured to provide a retrieval result to the user.

According to still another aspect, a server is provided, the server including a processor and a memory, the memory storing a computer program, the computer program being loaded and executed by the processor to implement the sample selection method according to the foregoing aspect.

According to yet another aspect, a computer readable storage medium is provided, the computer readable storage medium storing a computer program, the computer program being loaded and executed by a processor to implement the sample selection method according to the foregoing aspect.

According to still yet another aspect, a computer program product is provided, when executed, the computer program product being configured to perform the sample selection method according to the foregoing aspect.

Beneficial effects of the technical solutions according to the embodiments of the present disclosure are as follows.

An active learning technology is applied to the metric learning for the cross-modality data, and most valuable sample pairs are actively selected as training samples to significantly improve quality of the training samples. The most valuable sample pair is a sample pair having a positive effect on improving accuracy of the metric model, for example, a sample pair not learned and mastered by the metric model in a previous training process. The training samples selected in the embodiments of the present disclosure have higher quality than those selected by using the conventional technology. Therefore, the embodiments of the present disclosure have the following advantages. First, in a case that the same number of training samples are selected, a metric model obtained through training with training samples selected by using the method according to the embodiments of the present disclosure has higher accuracy. Second, to obtain metric models having the same precision, fewer training samples are required with the method according to the embodiments of the present disclosure, thereby improving efficiency of training a model and reducing time and costs required for labeling training samples. Therefore, compared with the conventional technology, in the technical solutions according the embodiments of the present disclosure, training samples of high quality are selected to train a metric model, so that the metric model of higher precision can be trained by using fewer training samples.

## BRIEF DESCRIPTION OF THE DRAWINGS

To describe the technical solutions in the embodiments of the present disclosure more clearly, the following briefly describes the accompanying drawings required for describing the embodiments. Apparently, the accompanying drawings in the following description show merely some embodiments of the present disclosure, and a person of ordinary skill in the art may still derive other drawings from these accompanying drawings without creative efforts.

FIG. 1 is a flowchart of a sample selection method according to an embodiment of the present disclosure;
FIG. 2 is a flowchart of a sample selection method according to another embodiment of the present disclosure;
FIG. 3 is a flowchart of a model training process according to an embodiment of the present disclosure;
FIG. 4 is a flowchart of a model optimization process according to an embodiment of the present disclosure;
FIG. 5 is a schematic diagram of a labeling interface according to the embodiments of the present disclosure;
FIG. 6 is a schematic diagram of a retrieval interface according to the embodiments of the present disclosure;
FIG. 7 is a block diagram of a sample selection apparatus according to an embodiment of the present disclosure; and
FIG. 8 is a schematic structural diagram of a server according to an embodiment of the present disclosure.

## DESCRIPTION OF EMBODIMENTS

To make the objectives, technical solutions, and advantages of the present disclosure clearer, the following further describes the implementations of the present disclosure in detail with reference to the accompanying drawings.

In embodiments of the present disclosure, an active learning technology is applied to metric learning for cross-modality data, and most valuable sample pairs are actively selected as training samples to perform correlation labeling and for model training, to significantly improve quality of the training samples, thereby achieving technical effects of improving accuracy of a final metric model obtained through training, improving efficiency of training the metric model, and reducing time and costs required for labeling the training samples. The following further describes the embodiments of the present disclosure in detail based on the foregoing common aspects in the embodiments of the present disclosure.

Steps of a method according to an embodiment of the present disclosure may be performed by a server. For example, the server may be one server, a server cluster including multiple servers, or a cloud computing service center.

The technical solutions according to the embodiments of the present disclosure are applied to the field of cross-modality data retrieval, for example, the field of retrieving data crossing two modalities, to be specific, an image and text. By using the metric model according to the embodiments of the present disclosure, a correlation between data in a same modality and a correlation between cross-modality data can be accurately calculated, to provide accurately retrieved content to a user.

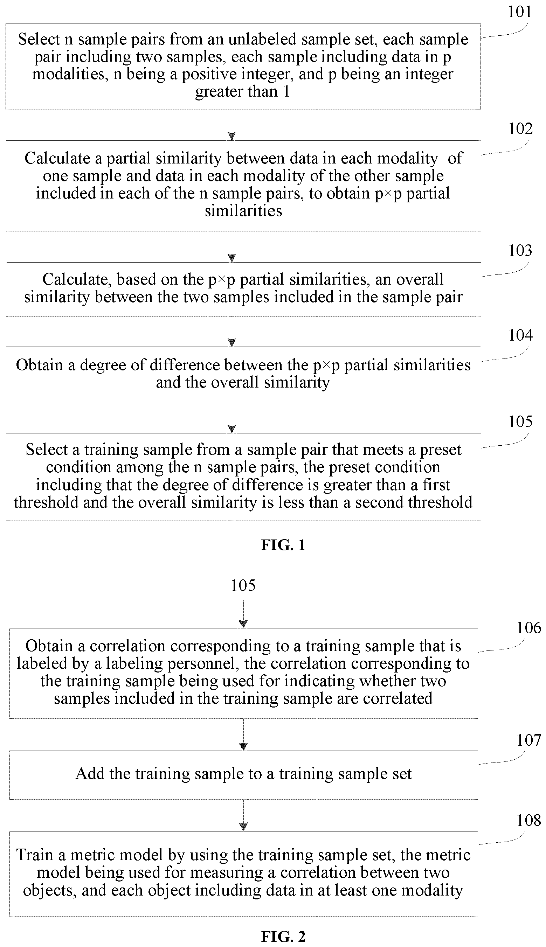

FIG. 1 is a flowchart of a sample selection method according to an embodiment of the present disclosure. The method may include the following steps 101 to 105.

In step 101, n sample pairs are selected from an unlabeled sample set. Each sample pair includes two samples, each sample includes data in p modalities, n being a positive integer, and p being an integer greater than 1.

The unlabeled sample set includes multiple samples, and each sample includes data in multiple modalities. There is a correlation between the data in the p modalities that is included in each sample. For example, each sample includes data in two modalities, which includes an image and text. The text is literal information for describing the image. For example, the text is used for describing content of the image.

In the embodiments of the present disclosure, a perspective from which modalities are classified is not limited. In an example, the modalities are classified from a perspective of data types. Data in different modalities are data of different data types: an image and text, an audio and text, a video and text, and an image and an audio. In another example, the modalities are classified from a perspective of data content. Data in different modalities are data of different data content. Data related to a physical condition is classified into multiple different modalities including: blood pressure data, blood glucose data, electrocardiogram data, weight data, and the like.

Optionally, the n sample pairs are randomly selected from the unlabeled sample set.

For example, the unlabeled sample set is represented by using a set U. The set U includes $N_1$ samples. The n sample pairs are randomly selected from the $N_1$ samples. The n sample pairs form a candidate training sample set. The candidate training sample set is represented by using a set P. For example, it is assumed that each sample includes data in two modalities which include an image and text.

In step 102, a partial similarity between data in each modality of one sample and data in each modality of the other sample in each of the n sample pairs is calculated, to obtain $p \times p$ partial similarities.

For each sample pair, the calculated $p \times p$ partial similarities include p similarities between data in same modalities and $p \times p - p$ similarities between cross-modality data. The foregoing example is still used as an example. It is assumed that each sample includes data in two modalities which includes an image and text. Four partial similarities can be calculated for each sample pair (including a first sample and a second sample). Two similarities between data in same modalities arc a similarity between an image of the first sample and an image of the second sample and a similarity between text of the first sample and text of the second sample. Another two similarities between cross-modality data are a similarity between the image of the first sample and the text of the second sample and a similarity between the text of the first sample and the image of the second sample.

Optionally, step 102 includes the following substeps 102a and 102b.

In step 102a, a feature is extracted from data in each modality of each sample included in each of the n sample pairs.

In actual application, the extracted feature varies with the modality. The extracted features may be preset according to an actual application requirement, and are not limited in this embodiment. For example, it is assumed that each sample includes data in two modalities which includes an image and text, and therefore features extracted from the sample include an image feature and a text feature. The image feature is extracted from the image included in the sample, and may be extracted by using a classic method in a digital image processing textbook. The image feature includes, but is not limited to, at least one of a color feature, a texture feature, and a shape feature. The text feature is extracted from the text included in the sample, and may be extracted by using a classic method in the field of natural language processing. The text feature includes, but is not limited to, a term frequency-inverse document frequency (TF-IDF) feature, a latent Dirichlet allocation (LDA) feature, a feature of part of speech, and the like.

For example, a sample is represented as $O$. An image feature extracted from the sample $O$ is $x \in \mathbb{R}^{D_x}$, a text feature extracted from the sample $O$ is $z \in \mathbb{R}^{D_z}$, and the sample $O$ may be represented as $O = [x; z]$ in a form of a feature vector. $D_x$ represents the number of dimensions (namely, the number of terms) of the image feature, and $D_z$ represents the number of dimensions (namely, the number of terms) of the text feature.

In step 102b, the p×p partial similarities are calculated for a feature of the data in each modality of one sample and a feature of the data in each modality of the other sample included in the sample pair.

The p×p partial similarities are calculated by using a metric model obtained through training for the feature of the data in each modality of one sample and the feature of the data in each modality of the other sample included in the sample pair. The metric model is obtained through training by using an established training sample set. The established training sample set is represented as a set L and includes $N_2$ training samples. Each training sample includes a sample pair which is labeled based on a correlation. In this embodiment of the present disclosure, training samples of high quality are selected by using the method and the process provided in this embodiment, and the training samples of high quality are used to update the training sample set L. Then an updated training sample set L is used to train the metric model again, to optimize the metric model.

An initial metric model is obtained through training by using an initial training sample set. The initial training sample set includes a small number of training samples. The small number of training samples may be randomly selected from the unlabeled sample set, and the selected training samples are used for training the initial metric model after the selected training samples are labeled based on correlations by a labeling personnel. In this embodiment, a metric model is represented as M. The metric model M is a matrix having k rows and k columns. k represents the sum of the numbers of dimensions (namely, the number of terms) of features of data in p modalities that is included in a sample. k is an integer greater than 1. For example, it is assumed that each sample includes data in two modalities which include an image and text. The image feature extracted from the sample O is $x \in \mathbb{R}^{D_x}$, the text feature extracted from the sample O is $z \in \mathbb{R}^{D_z}$, and the metric model M is a matrix having $(D_x + D_z)$ rows and $(D_x + D_z)$ columns. The metric model M is regarded to include p×p metric sub-models. Each metric sub-model is used for calculating a partial similarity for a feature of data in a modality of one object and a feature of data in a modality of the other object. The metric model M is used for calculating an overall similarity between two objects based on the p×p partial similarities. The foregoing object may be a sample in a training sample, or may be data inputted when the metric model is used to perform correlation metric.

For example, it is assumed that p is 2, and each sample includes data in two modalities which include an image and text. The image feature extracted from the sample O is $x \in \mathbb{R}^{D_x}$, the text feature extracted from the sample O is $z \in \mathbb{R}^{D_z}$, and the metric model M may be represented as:

$$M = \begin{pmatrix} M_{11} & M_{12} \\ M_{12}^T & M_{22} \end{pmatrix}.$$

The metric model M may be regarded to include four metric sub-models which include $M_{11}$, $M_{12}$, $M_{21}$ (namely, $M_{12}^T$), and $M_{22}$. The metric sub-model $M_{11}$ is a matrix having $D_x$ rows and $D_x$ columns, and is used for calculating a similarity between images of the two objects based on an image feature of one object and an image feature of the other object. The metric sub-model $M_{12}$ is a matrix having $D_x$ rows and $D_z$ columns, and is used for calculating a similarity between an image of one object and text of the other object based on the image feature of one object and a text feature of the other object. The metric sub-model $M_{21}$ is a matrix having $D_z$ rows and $D_x$ columns, and is used for calculating a similarity between text of one object and an image of the other object based on a text feature of one object and the image feature of the other object. The metric sub-model $M_{22}$ is a matrix having $D_z$ rows and $D_z$ columns, and is used for calculating a similarity between text of the two objects based on the text feature of one object and the text feature of the other object. Four partial similarities that are respectively represented as $S_{M_{11}}$, $S_{M_{22}}$, $S_{M_{12}}$, and $S_{M_{21}}$ can be calculated by using the metric model M.

In step 103, an overall similarity between the two samples included in the sample pair is calculated based on the p×p partial similarities.

Optionally, the p×p partial similarities are added to obtain the overall similarity. In this embodiment, the overall similarity is represented as $S_M$.

Using an example in which an overall similarity $S_M(o_i, o_j)$ between two samples $o_i$ and $o_j$ included in a sample pair ($o_i$, $o_j$) is calculated, a calculation process is as follows:

$$S_M(o_i, o_j) = o_i^T M o_j$$

$$= \begin{bmatrix} x_i^T & z_i^T \end{bmatrix} \begin{pmatrix} M_{11} & M_{12} \\ M_{12}^T & M_{22} \end{pmatrix} \begin{bmatrix} x_j \\ z_j \end{bmatrix}$$

$$= \begin{bmatrix} x_i^T & z_i^T \end{bmatrix} \begin{pmatrix} w_x w_x^T & w_x w_z^T \\ w_z w_x^T & w_z w_z^T \end{pmatrix} \begin{bmatrix} x_j \\ z_j \end{bmatrix}$$

$$= x_i^T w_x w_x^T x_j + z_i^T w_z w_x^T x_j x_i^T w_x w_z^T z_j + z_i^T w_z w_z^T z_j$$

$$= x_i^T M_{11} x_j + z_i^T M_{21} x_j x_i^T M_{12} z_j + z_i^T M_{22} z_j$$

$$= S_{M_{11}} + S_{M_{21}} + S_{M_{12}} + S_{M_{22}}$$

.

$X_i$ represents an image feature of the sample $O_i$. $Z_i$ represents a text feature of the sample $O_i$. $X_j$ represents an image feature of the sample $O_j$. $Z_j$ represents a text feature of the sample $O_j$.

In addition, an overall similarity between two samples included in a sample pair is calculated based on the p×p partial similarities by still using the metric model M obtained through training.

In step 104, a degree of difference between the p×p partial similarities and the overall similarity is obtained.

The degree of difference may be measured by using multiple standards such as variance and residual.

Optionally, in a case that variance is used to measure the degree of difference, a degree of difference var($o_i$, $o_j$) of the sample pair ($o_i$, $o_j$) is:

$$\text{var}(o_i, o_j) = \left( S_{M_{11}} - \frac{S_M}{4} \right)^2 + \left( S_{M_{12}} - \frac{S_M}{4} \right)^2 + \left( S_{M_{21}} - \frac{S_M}{4} \right)^2 + \left( S_{M_{22}} - \frac{S_M}{4} \right)^2$$

.

$S_M$ represents the overall similarity between the two samples $o_i$ and $o_j$ included in the sample pair ($o_i$, $o_j$), namely $S_M(o_i, o_j)$, $S_M$ for short herein. $S_{M_{11}}$, $S_{M_{22}}$, $S_{M_{12}}$, and $S_{M_{21}}$ respectively represent partial similarities between the two samples $o_i$ and $o_j$ included in the sample pair ($o_i$, $o_j$), namely, $S_{M_{11}}(o_i,o_j)$, $S_{M_{22}}(o_i,o_j)$, $S_{M_{12}}(o_i,o_j)$, and $S_{M_{21}}(o_i,o_j)$, $S_{M_{11}}$, $S_{M_{22}}$, $S_{M_{12}}$, and $S_{M_{21}}$ for short herein. In the degree of difference var($o_i$, $o_j$), both partial similarities between data in same modalities and partial similarities between cross-modality data are considered. The degree of difference var($o_i$, $o_j$) reflects a degree of inconsistence between the partial similarities and an overall similarity.

In step 105, a training sample is selected from a sample pair that meets a preset condition among the n sample pairs. The preset condition includes that the degree of difference is greater than a first threshold and the overall similarity is less than a second threshold.

After the overall similarity and the degree of difference of each sample pair are calculated, a most valuable sample pair is accordingly selected as the training sample. The most valuable sample pair is a sample pair having a positive effect on improving accuracy of a metric model, for example, a sample pair not learned and mastered by the metric model in a previous training process.

In an embodiment of the present disclosure, a sample pair having a relatively large degree of difference and a relatively small overall similarity is selected as a training sample, so that training samples of high quality are selected.

In an example, step 105 includes selecting, from the n sample pairs, a sample pair of which a degree of difference is greater than the first threshold and of which an overall similarity is less than the second threshold as the training sample. A value of the first threshold may be preset according to an actual requirement. If a sample pair having a larger degree of difference is to be selected, a larger value of the first threshold is set. A value of the second threshold may be preset according to an actual requirement. If a sample pair having a smaller overall similarity is to be selected, a smaller value of the second threshold is set.

In another example, step 105 includes the following substeps 105a and 105b.

In step 105a, an information amount of each of the n sample pairs is calculated based on the overall similarity and the degree of difference of the sample pair.

An information amount $dis(o_i, o_j)$ of the sample pair ($o_i, o_j$) is:

$$dis(o_i, o_j) = \frac{\mathrm{var}(o_i, o_j)}{\left|S_M(o_i, o_j)\right|}.$$

In step 105b, a sample pair of which an information amount is greater than a third threshold is selected from the n sample pairs as the training sample.

A value of the third threshold may be preset according to an actual requirement. If a sample pair having a larger degree of difference and a smaller overall similarity is to be selected, a larger value of the third threshold is set.

In another possible implementation, after the information amount of each sample pair is calculated, the n sample pairs are sorted in descending order of information amounts to obtain a sample pair sequence. First m sample pairs arc selected from the sample pair sequence as training samples, m is a positive integer. A value of m may be preset according to the number of training samples to be actually selected.

An information amount of a sample pair is calculated to maximize a degree of difference of the sample pair and minimize an overall similarity of the sample pair, thereby selecting a sample pair that meets the preset condition as the training sample.

In conclusion, in the method according to the embodiments of the present disclosure, an active learning technology is applied to metric learning for cross-modality data, and most valuable sample pairs are actively selected as training samples to significantly improve quality of the training samples. The training samples selected in the embodiments of the present disclosure have higher quality than those selected by using the conventional technology. Therefore, the embodiments of the present disclosure have the following advantages. First, in a case that the same number of training samples are selected, a metric model obtained through training with training samples selected by using the method according to the embodiments of the present disclosure has higher accuracy. Second, to obtain metric models having the same precision, fewer training samples are required with the method according to the embodiments of the present disclosure, thereby improving efficiency of training a model and reducing time and costs required for labeling training samples. Therefore, compared with the conventional technology, in the technical solutions according the embodiments of the present disclosure, training samples of high quality are selected to train a metric model, so that the metric model of higher precision can be trained by using fewer training samples.

In an optional embodiment provided based on the embodiment shown in FIG. 1, as shown in FIG. 2, after step 105, the following steps 106 to 108 are further included.

In step 106, correlation corresponding to the training sample that is labeled by a labeling personnel is obtained. The correlation corresponding to the training sample is used for indicating whether two samples included in the training sample are correlated.

After the training samples of high quality are screened by using the embodiment shown in FIG. 1, the labeling personnel needs to label the training samples based on correlations. That is, the labeling personnel determines whether the two samples included in the training sample are correlated with each other, and labels the training sample based on a determining result. The labeling personnel may be considered to be an expert. A correlation determined by the labeling personnel is accurate and authoritative.

Optionally, it is assumed that training samples selected from the n sample pairs form a to-be-labeled training sample set. The to-be-labeled training sample set is represented as a set Q. Each training sample in the set Q is provided for the labeling personnel to perform correlation labeling.

For example, a server sends the to-be-labeled training sample set Q to user equipment corresponding to the labeling personnel. On reception of the to-be-labeled training sample set Q, the user equipment displays the training samples, obtains correlations corresponding to the training samples that are labeled by the labeling personnel, and sends the correlations to the server.

In step 107, the training sample is added to a training sample set.

After the training samples are labeled based on correlations, the labeled training samples are added to the training sample set L, to update the training sample set L.

In step 108, a metric model is trained by using the training sample set. The metric model is used for measuring a correlation between two objects, and each object includes data in at least one modality.

The updated training sample set L is used to training the metric model M again, to optimize accuracy of the metric model M.

During actual implementation, the metric model may be trained for multiple times, to finally obtain a metric model of high precision. A small number of training samples of high quality are selected from an unlabeled sample set by using the metric model obtained through training. A metric model of higher precision is obtained though training again in combination of existing training samples and the newly selected training samples. Then, a small number of training samples of high quality are selected from the unlabeled sample set by using the metric model newly obtained through training. A metric model of higher precision is obtained though training in combination of existing training samples and the newly selected training samples. This cycle repeats until accuracy of a metric model obtained through training reaches a requirement.

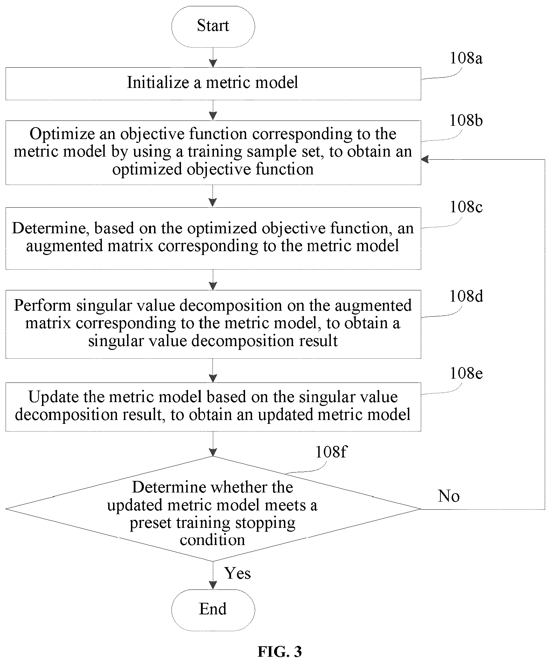

Optionally, as shown in FIG. 3, step 108 includes the following substeps 108a to 108f.

In step 108a, the metric model is initialized.

It is described above that the metric model M is the matrix having the k rows and the k columns, k represents the sum of the numbers of dimensions (namely, the numbers of terms) of the features of the data in the p modalities that is included in one sample. k is an integer greater than 1. Optionally, the metric model M is initialized into a unit matrix.

Optionally, in this embodiment, to optimize an objective function corresponding to the metric model M by using an accelerated proximal gradient (APG) method, a searching sequence Q corresponding to the metric model M needs to be initialized. The searching sequence Q is a temporary variable of the metric model M in a process of optimizing the objective function. The searching sequence Q is used for recording a suboptimal solution of the metric model M. An optimal solution of the metric model M can be calculated by using the searching sequence Q. The searching sequence Q is also a matrix having k rows and k columns. In this embodiment, optimizing the objective function by using the APG method can accelerate an optimization process of the objective function.

Optionally, the metric model M is initialized into the unit matrix, and the searching sequence Q is initialized into a matrix of which elements are all zero.

For example, it is assumed that each sample includes data in two modalities which includes an image and text. The image feature extracted from the sample O is $x \in \mathbb{R}^{D_x}$, the text feature extracted from the sample O is $z \in \mathbb{R}^{D_z}$, and the metric model M and the searching sequence Q are each a matrix having a size of $(D_x + D_z) \times (D_x + D_z)$.

In addition, the following processing may be performed on the training sample set L.

If a correlation labeled on the training sample (namely, the sample pair ($o_i$, $o_j$)) is correlated, the sample pair ($o_i$, $o_j$) is added to a set S, and a value of a correlation $Y_{ij}$ of the sample pair ($o_i$, $o_j$) is +1. If a correlation labeled on the sample pair ($o_i$, $o_j$) is uncorrelated, the sample pair ($o_i$, $o_j$) is added to a set D, and a value of a correlation $Y_{ij}$ of the sample pair ($o_i$, $o_j$) is -1. The correlation $Y_{ij}$ is represented as the following equation:

$$y_{ij} = \begin{cases} +1, & (o_i, o_j) \in S \\ -1, & (o_i, o_j) \in D \end{cases}.$$

In step 108b, an objective function corresponding to the metric model is optimized by using the training sample set, to obtain an optimized objective function.

$$\min_{M} \sum_{i,j=1}^{m,n} w_{ij} \log(1 + \exp(-y_{ij} S_M(o_i, o_j))) + \lambda \|M\|_*$$

Optionally, the objective function is .

$w_{ij}$ represents a weight corresponding to the sample pair ($o_i$, $o_j$), $Y_{ij}$ represents a correlation corresponding to the sample pair ($o_i$, $o_j$), and $S_M(o_i, o_j)$ represents an overall similarity of the sample pair ($o_i$, $o_j$). In an embodiment of the present disclosure, the overall similarity between the sample pair ($o_i$, $o_j$) is calculated by using a bilinear similarity metric function in the following form: $S_M(o_i, o_j) = o_i^T M o_j$.

Optionally, to facilitate calculation, a weight $w_{ij}$ corresponding to the sample pair ($o_i$, $o_j$) of which the labeled correlation is correlated is set to $\dfrac{1}{|S|}$, and a weight $w_{ij}$ corresponding to the sample pair ($o_i$, $o_j$) of which the labeled correlation is uncorrelated is set to $\dfrac{1}{|D|}$. A sign |•| represents the number of elements in a set, that is, |S| represents the number of elements in the set S, and |D| represents the number of elements in the set D.

In addition, $\|M\|_*$ represents a nuclear norm of a matrix M. In this embodiment, regularization of the matrix M by applying the nuclear norm to the matrix M is to learn a relation between data in different modalities.

The objective function may be abbreviated as $\min\limits_{M} l(M) + \lambda\|M\|_*$ , where

$$l(M) = \sum_{i,j=1}^{m,n} w_{ij}\log(1 + \exp(-y_{ij}S_M(o_i, o_j))).$$

In this embodiment, the APG method is used to optimize the objective function. An optimized objective function is:

$$\min_{M} l(Q_t) + \langle l'(Q_t), M - Q_t \rangle + \frac{1}{2\eta_t}\|M - Q_t\|_2^2 + \lambda\|M\|_* .$$

$l'(Q_t)$ is a first order derivative of the function $l(M)$ with respect to $Q_t$.

It should be noted that in this embodiment, only an example in which the APG method is used to optimize the objective function is used. Other methods for optimizing the objective function are not limited in this embodiment.

In step 108c, an augmented matrix corresponding to the metric model is determined based on the optimized objective function.

The following equation may be obtained by rearranging the optimized objective function:

$$\min_{M} \frac{1}{2}\|M - \tilde{M}_t\|_F^2 + \lambda\|M\|_* .$$

$\tilde{M}_t$ represents the augmented matrix of the metric model M, and $\tilde{M}_t = Q_t - \eta_t l'(Q_t)$.

In step 108d, singular value decomposition is performed on the augmented matrix of the metric model, to obtain a singular value decomposition result.

Singular value decomposition is performed on $\tilde{M}_t$, to obtain the singular value decomposition result: $\tilde{M}_t = U\Sigma V^T$ .

$U$ is a unitary matrix of an order $(D_x + D_z)\times(D_x + D_z)$, $\Sigma$ is a semi-definite diagonal matrix of an order $(D_x + D_z)\times(D_x + D_z)$, and $V^T$ is a conjugate transpose of $V$, and is a unitary matrix of an order $(D_x + D_z)\times(D_x + D_z)$. A diagonal element of $\Sigma$ is represented as $\Sigma_{ii}$, i being an i-th singular value of $\tilde{M}_t$.

In step 108e, the metric model is updated based on the singular value decomposition result, to obtain an updated metric model.

Optionally, the metric model M and the searching sequence Q are updated according to the following equations:

$$M_{t+1} = U\Sigma_{\lambda\eta_t}V^T, \lambda\eta_t = \max\left\{0, \Sigma_{ii} - \lambda\eta_t\right\};$$

and

$$Q_{t+1} = M_{t+1} + \frac{\alpha_t - 1}{\alpha_{t+1}}(M_{t+1} - M_t),$$

where

$$\alpha_{t+1} = \left(1 + \sqrt{1 + 4\alpha_t^2}\right)/2$$

, $\alpha_1$=1, $M_t$ represents the metric model M before the update, $M_{t+1}$ represents the updated metric model M, $Q_t$ represents the searching sequence Q before the update, and $Q_{t+1}$ represents the updated searching sequence Q. If in the following step 108f, it is determined that the updated metric model does not reach a preset training stopping condition, next round of training is required. In the next round of training, the augmented matrix of the metric model is calculated by using the updated searching sequence Q.

In step 108f, it is determined whether the updated metric model reaches a preset training stopping condition. If the updated metric model does not reach the preset training stopping condition , the process is performed again from step 108b, and if the updated metric model reaches the preset training stopping condition, the process is ended.

The preset training stopping condition includes at least one of: the number of iterations reaching a preset value, and the metric model M stopping changing. The foregoing preset value may be preset after overall consideration of training precision and a training speed of the model. If a requirement on the training precision of the model is higher, a larger value may be taken. If a requirement on the training speed of the model is higher, a smaller value may be taken.

By using the method according to this embodiment, the metric model is trained again by using the updated training sample set, so that accuracy of the metric model is optimized.

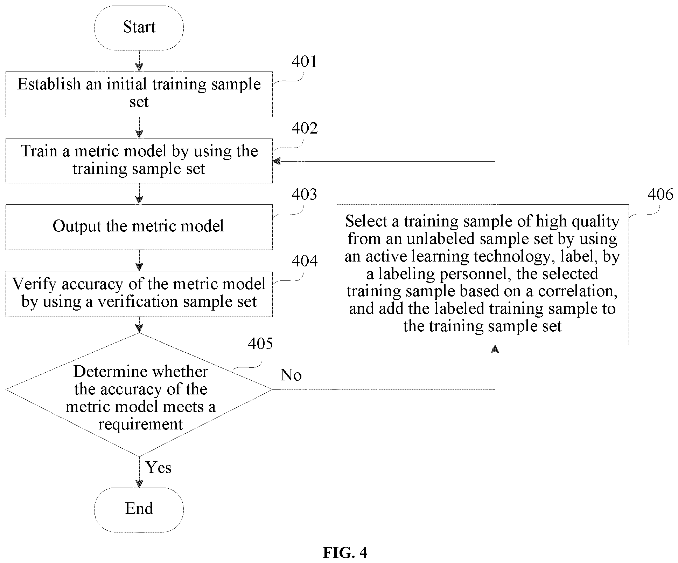

FIG. 4 is a flowchart of a model optimization process according to an embodiment of the present disclosure. The model optimization process includes the following steps 401 to 406.

In step 401, an initial training sample set is established.

The initial training sample set may include a small number of training samples. The small number of training samples may be randomly selected from an unlabeled sample set, and the selected training samples are used for training an initial metric model after the selected training samples are labeled based on correlations by a labeling personnel.

In step 402, a metric model is trained by using the training sample set.

For a training process of the model, reference is made to descriptions in the embodiment shown in FIG. 3, and details are not described herein.

In step 403, the metric model is outputted.

In step 404, accuracy of the metric model is verified by using a verification sample set.

The verification sample set includes at least one verification sample. Each verification sample includes a sample pair which is labeled based on a correlation. The verification sample is inputted into the metric model, the metric model is used to predict a correlation of each sample pair included in the verification sample, and the predicted correlation is compared with the labeled correlation, so that whether a prediction result is accurate can be determined. In actual application, prediction results corresponding to multiple verification samples may be comprehensively considered, to obtain accuracy of the metric model. For example, the accuracy of the metric model = the number of verification samples of which prediction results are correct/the total number of verification samples.

In step 405, it is determined whether the accuracy of the metric model meets a requirement. If the accuracy of the metric model reaches the requirement, the process is ended, and if the accuracy of the metric model does not reach a requirement, the following step 406 is performed.

Optionally, whether the accuracy of the metric model is greater than or equal to a preset accuracy threshold is determined. If the accuracy of the metric model is greater than or equal to the preset accuracy threshold, it is determined that the accuracy of the metric model reaches the requirement. If the accuracy of the metric model is less than the preset accuracy threshold, it is determined that the accuracy of the metric model does not reach the requirement. The accuracy threshold may be preset according to a requirement on the precision of the metric model. A higher precision requirement indicates a larger accuracy threshold.

In step 406, a training sample of high quality is selected from an unlabeled sample set by using an active learning technology, the selected training sample is labeled based on a correlation by a labeling personal, and the labeled training sample is added to the training sample set. After step 406, the steps are performed from step 402 again.

For a selection process of the training sample, reference may be made to descriptions in the embodiment of FIG. 1. For a labeling process of the training sample, reference may be made to descriptions in the embodiment of FIG. 2.

The technical solutions according to the embodiments of the present disclosure may be applied to the field of cross-modality data retrieval, for example, the field of retrieving data crossing two modalities which include an image and text. Most valuable sample pairs are selected by using the active learning technology as training samples, and the training samples are labeled based on correlations by a professional labeling personnel, so that labeling costs can be reduced, and an accurate metric model can be obtained through efficient training. For example, subscription account searching is used as an example. Related information of a subscription account generally includes data crossing two modalities including an image (for example, an icon of the subscription account) and text (for example, brief introduction of the subscription account). It is assumed that a current training sample set includes a small number of training samples.

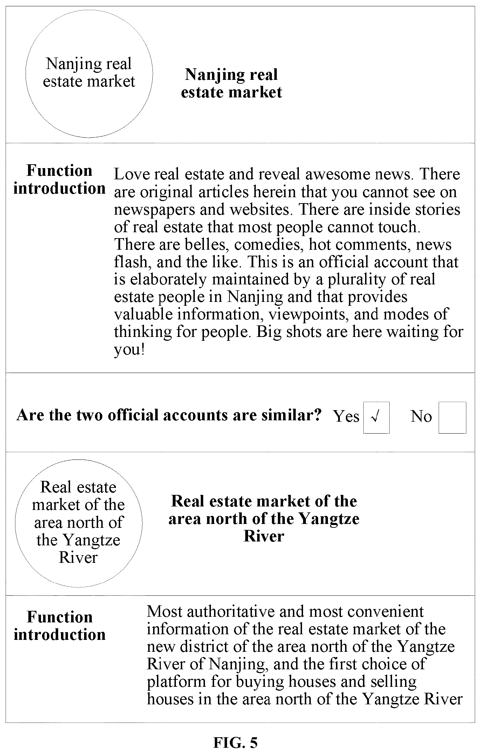

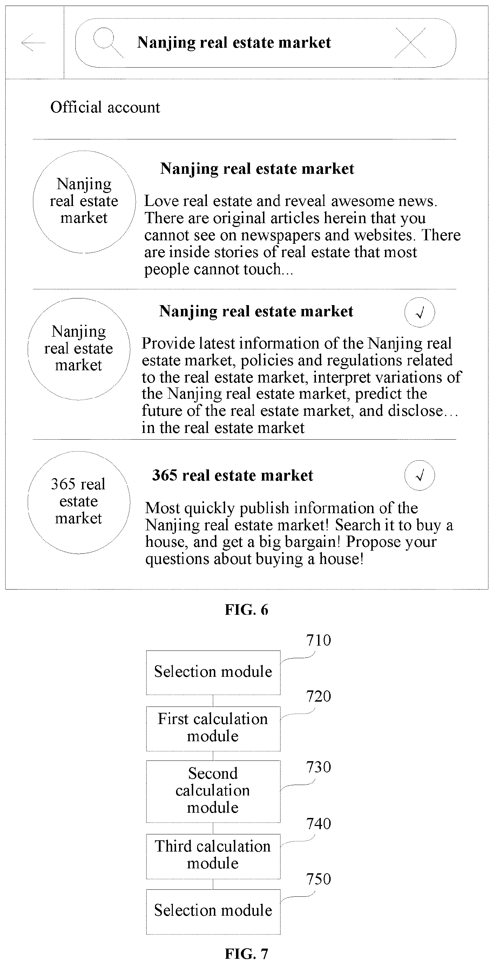

The small number of training samples are used to obtain an initial metric model through training. Training samples (for example, subscription accounts such as Nanjing real estate market and Jiangbei real estate market) of high quality are selected from an unlabeled sample set by using the active learning technology. The training samples are labeled based on correlations by a labeling personnel by using a labeling interface, for example, as shown in FIG. 5. The training samples which are labeled based on correlations are added to the training sample set. An updated training sample set is used to train the metric model again. If accuracy of the metric model obtained through training does not reach a requirement, training samples are continuously selected to update the training sample set, and the metric model is trained again. If the accuracy of the metric model obtained through training reaches the requirement, it indicates that an accurate metric model is obtained. Then, the metric model is used to retrieve, based on retrieval information entered by a user, a subscription account related to the retrieval information. An exemplary retrieval interface is shown in FIG. 6.

In the following, an apparatus embodiment of the present disclosure is described. The apparatus can be used to implement the method embodiments of the present disclosure. For details not disclosed in the apparatus embodiment of the present disclosure, one can refer to the method embodiments of the present disclosure.

FIG. 7 is a block diagram of a sample selection apparatus according to an embodiment of the present disclosure. The apparatus has functions of implementing the foregoing method embodiments. The functions may be implemented by using hardware, or may be implemented by hardware executing corresponding software. The apparatus may include: a selection module 710, a first calculation module 720, a second calculation module 730, a third calculation module 740, and a selection module 750.

The selection module 710 is configured to perform the foregoing step 101.

The first calculation module 720 is configured to perform the foregoing step 102.

The second calculation module 730 is configured to perform the foregoing step 103.

The third calculation module 740 is configured to perform the foregoing step 104.

The selection module 750 is configured to perform the foregoing step 105.

Optionally, the selection module 750 includes a calculation unit and a selection unit. The calculation unit is configured to perform the foregoing step 105a. The selection unit is configured to perform the foregoing step 105b.

Optionally, the first calculation module 720 includes an extraction unit and a calculation unit. The extraction unit is configured to perform the foregoing step 102a. The calculation unit is configured to perform the foregoing step 102b.

Optionally, the apparatus further includes an obtaining module, an addition module, and a training module. The obtaining module is configured to perform the foregoing step 106. The addition module is configured to perform the foregoing step 107. The training module is configured to perform the foregoing step 108.

Optionally, the training module includes an initialization unit, an optimization unit, a determining unit, a decomposition unit, an update unit, and a judging unit. The initialization unit is configured to perform the foregoing step 108a. The optimization unit is configured to perform the foregoing step 108b. The determining unit is configured to perform the foregoing step 108c. The decomposition unit is configured to perform the foregoing step 108d. The update unit is configured to perform the foregoing step 108e. The judging unit is configured to perform the foregoing step 108f.

For related details, reference may be made to the foregoing method embodiments.

It should be noted that, when the apparatus provided in the foregoing embodiment implements the functions of the apparatus, only division of the foregoing function modules is used as an example for description. In the practical application, the functions may be allocated to and implemented by different function modules according to requirements. That is, an internal structure of the device is divided into different function modules, to implement all or some of the functions described above. In addition, the apparatus and method embodiments provided in the foregoing embodiments belong to one conception. For the specific implementation process, one can refer to the method embodiments, and details are not described herein again.

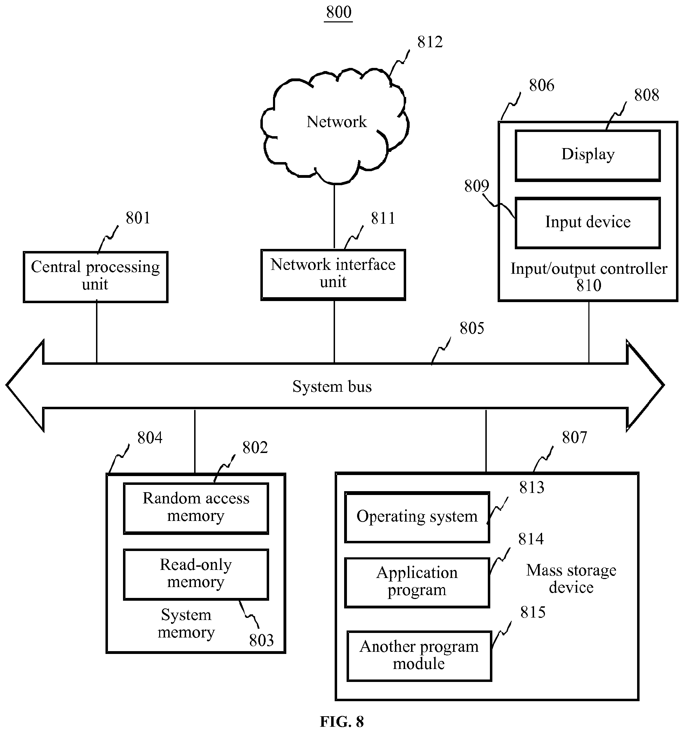

FIG. 8 is a schematic structural diagram of a server according to an embodiment of the present disclosure. The server is configured to implement the method provided in the foregoing embodiments.

A server 800 includes a central processing unit (CPU) 801, a system memory 804 including a random access memory (RAM) 802 and a read-only memory (ROM) 803, and a system bus 805 connecting the system memory 804 and the CPU 801. The server 800 further includes a basic input/output system (I/O system) 806 facilitating transmission of information between components in a computer, and a mass storage device 807 used for storing an operating system 813, an application program 814, and another program module 815.

The basic I/O system 806 includes a display 808 used for displaying information, and an input device 809, such as a mouse and a keyboard, used for a user to input information. The display 808 and the input device 809 are connected to an input/output controller 810 of the system bus 805, to be connected to the CPU 801. The basic I/O system 806 may further include the input/output controller 810, to receive and process input of multiple other devices, such as the keyboard, the mouse, or an electronic stylus. Similarly, the input and output controller 810 further provides an output to a display screen, a printer or another type of output device.

The mass storage device 807 is connected to a mass storage controller (not shown) of the system bus 805, to be connected to the CPU 801. The mass storage device 807 and an associated computer readable medium provide non-volatile storage for the server 800. That is, the mass storage device 807 may include a computer readable medium (not shown), such as a hard disk or a CD-ROM drive.

Without loss of generality, the computer readable medium may include a computer storage medium and a communication medium. The computer storage medium includes volatile and non-volatile media, and removable and non-removable media implemented by using any method or technology used for storing information such as a computer readable instruction, a data structure, a program module, or other data. The computer storage medium includes a RAM, a ROM, an EPROM, an EEPROM, a flash memory, or other solid storage technologies; a CD-ROM, a DVD, or other optical storages; and a cassette, a magnetic tape, a disk storage, or other magnetic storage devices. Certainly, a person skilled in the art may know that the computer storage medium is not limited to the foregoing. The system memory 804 and the mass storage device 807 may be collectively referred to as a memory.

According to the embodiments of the present disclosure, the server 800 may further be connected to a remote computer on a network through a network, such as Internet. That is, the server 800 may be connected to a network 812 by being connected to a network interface unit 811 on the system bus 805, or, may be connected to a network of another type or a remote computer system (not shown) by using the network interface unit 811.

The memory further includes one or more programs. The one or more programs are stored in the memory and configured to be executed by one or more processors. The one or more programs include an instruction used for performing the foregoing methods.

In an exemplary embodiment, a non-transitory computer readable storage medium including a computer instruction, for example, a memory including a computer instruction, is further provided. The computer instruction may be executed by a processor of a server to complete the steps in the foregoing method embodiments. For example, the non-transitory computer readable storage medium may be a ROM, a RAM, a CD-ROM, a magnetic tape, a floppy disk, and an optical data storage device.

In an exemplary embodiment, a computer program product is provided. When the computer program product is executed, the computer program product is configured to implement functions of the steps in the foregoing method embodiments.

It should be understood that "multiple" mentioned in the specification means two or more. "And/or" describes an association relationship for describing associated objects and represents that three relationships may exist. For example, A and/or B may represent the following three cases: Only A exists, both A and B exist, and only B exists. In addition, the character "/" generally indicates an "or" relationship between the associated objects.

The sequence numbers of the embodiments of the present disclosure are merely for description purpose but do not indicate the preference of the embodiments.

A person of ordinary skill in the art may understand that all or some of the steps of the foregoing embodiments may be implemented by using hardware, or may be implemented by a program instructing relevant hardware. The program may be stored in a computer readable storage medium. The storage medium may be a read-only memory, a magnetic disk, an optical disc, or the like.

**Claims**

1. A method for retrieving cross-modality data, applied to a server and comprising:

   (i) acquiring a training sample set by:

   selecting (101) n sample pairs from an unlabeled sample set, each sample pair comprising two samples, each sample comprising data in p modalities, n being a positive integer, and p being an integer greater than 1, wherein the data in the p modalities is data of different data types, which include an image and text, an audio and text, a video and text, or an image and an audio, or wherein the data in the p modalities is data of different data content, which includes blood pressure data, blood glucose data, electrocardiogram data, and/or weight data,
   calculating (102) a partial similarity between data in each modality of one sample and data in each modality of the other sample comprised in each of the n sample pairs, to obtain $p \times p$ partial similarities, the calculated $p \times p$ partial similarities including p similarities between data in same modalities and $p \times p$-p similarities between cross-modality data,
   calculating (103), based on the $p \times p$ partial similarities, an overall similarity between the two samples comprised in the sample pair,
   obtaining (104) a degree of difference between the $p \times p$ partial similarities and the overall similarity,
   selecting (105) a training sample from a sample pair that meets a preset condition among the n sample pairs, the preset condition comprising that the degree of difference is greater than a first threshold and the overall similarity is less than a second threshold,
obtaining (106) a correlation corresponding to the training sample that is labeled by a labeling personnel, the correlation being used for indicating whether two samples comprised in the training sample are correlated, and
adding (107) the training sample to a training sample set,

(ii) training (108) a metric model by using the training sample set, the metric model being used for measuring a correlation between two objects, each object comprising data in at least one of the p modalities, the metric model including p×p metric sub-models, each metric sub-model being used for calculating a partial similarity for a feature of data in a modality of one object and a feature of data in a modality of the other object, and
(iii) retrieving the cross-modality data by:

receiving retrieval information entered by a user, the retrieval information comprising data in one of the p modalities, and
retrieving, based on the retrieval information entered by the user and using the metric model, cross-modality data comprising data in another one of the p modalities,

(iv) providing a retrieval result to the user.

2. The method according to claim 1, wherein the selecting a training sample from a sample pair that meets a preset condition among the n sample pairs comprises:

calculating, based on the overall similarity and the degree of difference of each of the n sample pairs, an information amount of the sample pair; and
selecting, from the n sample pairs, a sample pair of which an information amount is greater than a third threshold as the training sample.

3. The method according to claim 1 or 2, wherein the calculating a partial similarity between data in each modality of one sample and data in each modality of the other sample comprised in each of the n sample pairs, to obtain p×p partial similarities comprises:

extracting a feature from data in each modality of each sample comprised in each of the n sample pairs; and
calculating the p×p partial similarities based on a feature of the data in each modality of one sample and a feature of the data in each modality of the other sample comprised in the sample pair.

4. The method according to claim 1, wherein the metric model is trained by using the training sample set by:

initializing (108a) the metric model;
optimizing (108b) an objective function corresponding to the metric model by using the training sample set, to obtain an optimized objective function;
determining (108c), based on the optimized objective function, an augmented matrix corresponding to the metric model;
performing (108d) singular value decomposition on the augmented matrix corresponding to the metric model, to obtain a singular value decomposition result;
updating (108e) the metric model based on the singular value decomposition result, to obtain an updated metric model;
determining (108f) whether the updated metric model meets a preset training stopping condition; and
performing training again from the step of optimizing an objective function corresponding to the metric model by using the updated training sample set, to obtain an optimized objective function, if the updated metric model does not reach the preset training stopping condition, and
ending the training if the updated metric model meets the preset training stopping condition.

5. An apparatus for retrieving cross-modality data, applied to a server and comprising:

(i) an acquiring unit, configured to acquire a training sample set, comprising:

a selection module (710), configured to select n sample pairs from an unlabeled sample set, each sample pair comprising two samples, each sample comprising data in p modalities, n being a positive integer, and p being an integer greater than 1, wherein the data in the p modalities is data of different data types, which include an image and text, an audio and text, a video and text, or an image and an audio, or wherein the data in the p modalities is data of different data content, which includes blood pressure data, blood glucose data, electrocardiogram data, and/or weight data;

a first calculation module (720), configured to calculate a partial similarity between data in each modality of one sample and data in each modality of the other sample comprised in each of the n sample pairs, to obtain $p \times p$ partial similarities, the calculated $p \times p$ partial similarities including p similarities between data in same modalities and $p \times p\text{-}p$ similarities between cross-modality data;

a second calculation module (730), configured to calculate, based on the $p \times p$ partial similarities, an overall similarity between the two samples comprised in the sample pair;

a third calculation module (740), configured to obtain a degree of difference between the $p \times p$ partial similarities and the overall similarity; and

a selection module (750), configured to select a training sample from a sample pair that meets a preset condition among the n sample pairs, the preset condition comprising that the degree of difference is greater than a first threshold and the overall similarity is less than a second threshold;

an obtaining module, configured to obtain a correlation corresponding to the training sample that is labeled by a labeling personnel, the correlation being used for indicating whether two samples comprised in the training sample are correlated;

an addition module, configured to add the training sample to a training sample set; and

(ii) a training module, configured to train a metric model by using the training sample set, the metric model being used for measuring a correlation between two objects, each object comprising data in at least one of the p modalities, the metric model including $p \times p$ metric sub-models, each metric sub-model being used for calculating a partial similarity for a feature of data in a modality of one object and a feature of data in a modality of the other object, and

(iii) a retrieval unit, configured to retrieve the cross-modality data, comprising:

a reception unit, configured to receive retrieval information entered by a user, the retrieval information comprising data in one of the p modalities,

a retrieval module, configured to retrieve, based on the retrieval information entered by the user and using the metric model, cross-modality data comprising data in another one of the p modalities,

(iv) a providing unit, configured to provide a retrieval result to the user.

6. The apparatus according to claim 5, wherein the selection module comprises:

a calculation unit, configured to calculate, based on the overall similarity and the degree of difference of each of the n sample pairs, an information amount of the sample pair; and

a selection unit, configured to select, from the n sample pairs, a sample pair of which an information amount is greater than a third threshold as the training sample.

7. The apparatus according to claim 5 or 6, wherein the first calculation module comprises:

an extraction unit, configured to extract a feature from data in each modality of each sample comprised in each of the n sample pairs; and

a calculation unit, configured to calculate the $p \times p$ partial similarities based a feature of the data in each modality of one sample and a feature of the data in each modality of the other sample comprised in the sample pair.

8. The apparatus according to claim 5, wherein the training module comprises:

an initialization unit, configured to initialize the metric model;

an optimization unit, configured to optimize an objective function corresponding to the metric model by using the training sample set, to obtain an optimized objective function;

a determining unit, configured to determine, based on the optimized objective function, an augmented matrix corresponding to the metric model;

a decomposition unit, configured to perform singular value decomposition on the augmented matrix corresponding to the metric model, to obtain a singular value decomposition result;

an update unit, configured to update the metric model based on the singular value decomposition result, to obtain an updated metric model;

a judging unit, configured to: determine whether the updated metric model meets a preset training stopping condition, training being performed again from the step of optimizing an objective function corresponding to the metric model by using the training sample set, to obtain an optimized objective function, if the updated metric model does not reach the preset training stopping condition; and the training being ended if the updated metric model meets the preset training stopping condition.

9. A server, comprising a processor and a memory, the memory storing a computer program, the computer program being loaded and executed by the processor to implement the sample selection method according to any one of claims 1 to 4.

10. A computer readable storage medium, storing a computer program, the computer program being loaded and executed by a processor to implement the sample selection method according to any one of claims 1 to 4.

**Patentansprüche**

1. Verfahren zum Abrufen von modalitätsübergreifenden Daten, das auf einen Server angewendet wird und Folgendes umfasst:

(i) Erfassen eines Satzes von Trainingsproben durch:

Auswählen (101) von n Probenpaaren aus einem ungelabelten Probensatz, wobei jedes Probenpaar zwei Proben umfasst, wobei jede Probe Daten in p Modalitäten umfasst, wobei n eine positive ganze Zahl ist und p eine ganze Zahl größer als 1 ist, wobei die Daten in den p Modalitäten Daten unterschiedlicher Datentypen sind, die ein Bild und einen Text, ein Audio und einen Text, ein Video und einen Text oder ein Bild und ein Audio umfassen, oder wobei die Daten in den p Modalitäten Daten mit unterschiedlichem Dateninhalt sind, die Blutdruckdaten, Blutzuckerdaten, Elektrokardiogrammdaten und/oder Gewichtsdaten umfassen,

Berechnen (102) einer partiellen Ähnlichkeit zwischen Daten in jeder Modalität einer Probe und Daten in jeder Modalität der anderen Probe, die in jedem der n Probenpaare enthalten sind, um $p \times p$ partielle Ähnlichkeiten zu erhalten, wobei die berechneten $p \times p$ partiellen Ähnlichkeiten p Ähnlichkeiten zwischen Daten in denselben Modalitäten und $p \times p$-p Ähnlichkeiten zwischen modalitätsübergreifenden Daten umfassen,

Berechnen (103), auf der Grundlage der $p \times p$ partiellen Ähnlichkeiten, einer Gesamtähnlichkeit zwischen den beiden Proben, die in dem Probenpaar enthalten sind,

Erhalten (104) eines Grades der Differenz zwischen den $p \times p$ partiellen Ähnlichkeiten und der Gesamtähnlichkeit,

Auswählen (105) einer Trainingsprobe aus einem Probenpaar, das eine voreingestellte Bedingung unter den n Probenpaaren erfüllt, wobei die voreingestellte Bedingung umfasst, dass der Grad der Differenz größer als ein erster Schwellenwert ist und die Gesamtähnlichkeit kleiner als ein zweiter Schwellenwert ist,

Erhalten (106) einer Korrelation, die zu der Trainingsprobe, die von einem Labelingpersonal gelabelt wird, korrespondiert, wobei die Korrelation verwendet wird, um anzuzeigen, ob zwei Proben, die in der Trainingsprobe enthalten sind, korreliert sind, und

Hinzufügen (107) der Trainingsprobe zu einem Trainingsprobensatz,

(ii) Trainieren (108) eines metrischen Modells unter Verwendung des Trainingsprobensatzes, wobei das metrische Modell zum Messen einer Korrelation zwischen zwei Objekten verwendet wird, wobei jedes Objekt Daten in mindestens einer der p Modalitäten umfasst, wobei das metrische Modell $p \times p$ metrische Teilmodelle enthält, wobei jedes metrische Teilmodell zum Berechnen einer partiellen Ähnlichkeit für ein Merkmal von Daten in einer Modalität eines Objekts und ein Merkmal von Daten in einer Modalität des anderen Objekts verwendet wird, und

(iii) Abrufen der modalitätsübergreifenden Daten durch:

Empfangen von Abrufinformationen, die von einem Benutzer eingegeben wurden, wobei die Abrufinformationen Daten in einer der p Modalitäten umfassen, und

Abrufen, auf der Grundlage der von dem Benutzer eingegebenen Abrufinformationen und unter Verwendung des metrischen Modells, von modalitätsübergreifenden Daten, die Daten in einer anderen der p Modalitäten umfassen,

(iv) Bereitstellen eines Abrufergebnisses für den Benutzer.

2. Verfahren nach Anspruch 1, wobei das Auswählen einer Trainingsprobe aus einem Probenpaar, das eine vorgegebene Bedingung unter den n Probenpaaren erfüllt, umfasst:

Berechnen, auf der Grundlage der Gesamtähnlichkeit und des Grades der Differenz jedes der n Probenpaare, eines Informationsbetrags des Probenpaares; und
Auswählen eines Probenpaares aus den n Probenpaaren, dessen Informationsmenge größer als ein dritter Schwellenwert ist, als die Trainingsprobe.

3. Verfahren nach Anspruch 1 oder 2, wobei das Berechnen einer partiellen Ähnlichkeit zwischen Daten in jeder Modalität einer Probe und Daten in jeder Modalität der anderen Probe, die in jedem der n Probenpaare enthalten ist, um $p \times p$ partielle Ähnlichkeiten zu erhalten, umfasst:

Extrahieren eines Merkmals aus Daten in jeder Modalität jeder Probe, die in jedem der n Probenpaare enthalten ist; und
Berechnen der $p \times p$ partiellen Ähnlichkeiten auf der Grundlage eines Merkmals der Daten in jeder Modalität einer Probe und eines Merkmals der Daten in jeder Modalität der anderen Probe, die in dem Probenpaar enthalten ist.

4. Verfahren nach Anspruch 1, wobei das metrische Modell unter Verwendung des Trainingsprobensatzes durch Folgendes trainiert wird:

Initialisieren (108a) des metrischen Modells;
Optimieren (108b) einer Zielfunktion, die zu dem metrischen Modell korrespondiert, unter Verwendung des Trainingsprobensatzes, um eine optimierte Zielfunktion zu erhalten;
Bestimmen (108c), auf der Grundlage der optimierten Zielfunktion, einer erweiterten Matrix, die zu dem metrischen Modell korrespondiert;
Durchführen (108d) einer Singulärwertzerlegung an der erweiterten Matrix, die zu dem metrischen Modell korrespondiert, um ein Ergebnis der Singulärwertzerlegung zu erhalten;
Aktualisieren (108e) des metrischen Modells auf der Grundlage des Ergebnisses der Singulärwertzerlegung, um ein aktualisiertes metrisches Modell zu erhalten;
Bestimmen (108f), ob das aktualisierte metrische Modell eine voreingestellte Trainingsabbruchbedingung erfüllt; und
erneutes Durchführen des Trainings ab dem Schritt des Optimierens einer Zielfunktion, die zu dem metrischen Modell korrespondiert, unter Verwendung des aktualisierten Trainingsprobensatzes, um eine optimierte Zielfunktion zu erhalten, wenn das aktualisierte metrische Modell die voreingestellte Trainingsabbruchbedingung nicht erreicht, und
Beenden des Trainings, wenn das aktualisierte metrische Modell die voreingestellte Trainingsabbruchbedingung erfüllt.

5. Vorrichtung zum Abrufen von modalitätsübergreifenden Daten, die auf einen Server angewendet wird und Folgendes umfasst:

(i) eine Erfassungseinheit, die konfiguriert ist zum Erfassen eines Trainingsprobensatzes, umfassend:

ein Auswahlmodul (710), das konfiguriert ist zum Auswählen von n Probenpaaren aus einem ungelabelten Probensatz, wobei jedes Probenpaar zwei Proben umfasst, wobei jede Probe Daten in p Modalitäten umfasst, wobei n eine positive ganze Zahl ist und p eine ganze Zahl größer als 1 ist, wobei die Daten in den p Modalitäten Daten unterschiedlicher Datentypen sind, die ein Bild und einen Text, ein Audio und einen Text, ein Video und einen Text oder ein Bild und ein Audio umfassen, oder wobei die Daten in den p Modalitäten Daten mit unterschiedlichem Dateninhalt sind, die Blutdruckdaten, Blutzuckerdaten, Elektrokardiogrammdaten und/oder Gewichtsdaten umfassen;
ein erstes Berechnungsmodul (720), das konfiguriert ist zum Berechnen einer partiellen Ähnlichkeit zwischen Daten in jeder Modalität einer Probe und Daten in jeder Modalität der anderen Probe, die in jedem der n Probenpaare enthalten ist, um $p \times p$ partielle Ähnlichkeiten zu erhalten, wobei die berechneten $p \times p$ partiellen Ähnlichkeiten p Ähnlichkeiten zwischen Daten in denselben Modalitäten und $p \times p - p$ Ähnlichkeiten zwischen modalitätsübergreifenden Daten umfassen;

ein zweites Berechnungsmodul (730), das konfiguriert ist zum Berechnen, auf der Grundlage der p×p partiellen Ähnlichkeiten, einer Gesamtähnlichkeit zwischen den beiden Proben, die in dem Probenpaar enthalten sind;

ein drittes Berechnungsmodul (740), das konfiguriert ist zum Erhalten eines Grades der Differenz zwischen den p×p partiellen Ähnlichkeiten und der Gesamtähnlichkeit; und

ein Auswahlmodul (750), das konfiguriert ist zum Auswählen einer Trainingsprobe aus einem Probenpaar, das eine voreingestellte Bedingung unter den n Probenpaaren erfüllt, wobei die voreingestellte Bedingung umfasst, dass der Grad der Differenz größer als ein erster Schwellenwert ist und die Gesamtähnlichkeit kleiner als ein zweiter Schwellenwert ist;

ein Erfassungsmodul, das konfiguriert ist zum Erhalten einer Korrelation, die zu der Trainingsprobe, die von einem Labelingpersonal gelabelt wird, korrespondiert, wobei die Korrelation verwendet wird, um anzuzeigen, ob zwei Proben, die in der Trainingsprobe enthalten sind, korreliert sind;

ein Hinzufügungsmodul, das konfiguriert ist zum Hinzufügen der Trainingsprobe zu einem Trainingsprobensatz; und

(ii) ein Trainingsmodul, das konfiguriert ist zum Trainieren eines metrischen Modells unter Verwendung des Trainingsprobensatzes, wobei das metrische Modell zum Messen einer Korrelation zwischen zwei Objekten verwendet wird, wobei jedes Objekt Daten in mindestens einer der p Modalitäten umfasst, wobei das metrische Modell p×p metrische Teilmodelle enthält, wobei jedes metrische Teilmodell zum Berechnen einer partiellen Ähnlichkeit für ein Merkmal von Daten in einer Modalität eines Objekts und ein Merkmal von Daten in einer Modalität des anderen Objekts verwendet wird, und

(iii) eine Abrufeinheit, die konfiguriert ist zum Abrufen der modalitätsübergreifenden Daten, umfassend:

eine Empfangseinheit, die konfiguriert ist zum Empfangen von Abrufinformationen, die von einem Benutzer eingegeben wurden, wobei die Abrufinformationen Daten in einer der p Modalitäten umfassen,

ein Abrufmodul, das konfiguriert ist zum Abrufen, auf der Grundlage der von dem Benutzer eingegebenen Abrufinformationen und unter Verwendung des metrischen Modells, von modalitätsübergreifenden Daten, die Daten in einer anderen der p Modalitäten umfassen,

(iv) eine Bereitstellungseinheit, die konfiguriert ist zum Bereitstellen eines Abrufergebnisses für den Benutzer.

6. Vorrichtung nach Anspruch 5, wobei das Auswahlmodul umfasst:

eine Berechnungseinheit, die konfiguriert ist zum Berechnen, auf der Grundlage der Gesamtähnlichkeit und des Grades der Differenz jedes der n Probenpaare, eines Informationsbetrags des Probenpaares; und

eine Auswahleinheit, die konfiguriert ist zum Auswählen eines Probenpaares aus den n Probenpaaren, dessen Informationsmenge größer als ein dritter Schwellenwert ist, als die Trainingsprobe.

7. Vorrichtung nach Anspruch 5 oder 6, wobei das erste Berechnungsmodul umfasst:

eine Extraktionseinheit, die konfiguriert ist zum Extrahieren eines Merkmals aus Daten in jeder Modalität jeder Probe, die in jedem der n Probenpaare enthalten ist; und

eine Berechnungseinheit, die konfiguriert ist zum Berechnen der p×p partiellen Ähnlichkeiten auf der Grundlage eines Merkmals der Daten in jeder Modalität einer Probe und eines Merkmals der Daten in jeder Modalität der anderen Probe, die in dem Probenpaar enthalten ist.

8. Vorrichtung nach Anspruch 5, wobei das Trainingsmodul umfasst:

eine Initialisierungseinheit, die konfiguriert ist zum Initialisieren des metrischen Modells;

eine Optimierungseinheit, die konfiguriert ist zum Optimieren einer Zielfunktion, die zu dem metrischen Modell korrespondiert, unter Verwendung des Trainingsprobensatzes, um eine optimierte Zielfunktion zu erhalten;

eine Bestimmungseinheit, die konfiguriert ist zum Bestimmen, auf der Grundlage der optimierten Zielfunktion, einer erweiterten Matrix, die zu dem metrischen Modell korrespondiert;

eine Zerlegungseinheit, die konfiguriert ist zum Durchführen einer Singulärwertzerlegung an der erweiterten Matrix, die zu dem metrischen Modell korrespondiert, um ein Ergebnis der Singulärwertzerlegung zu erhalten;

eine Aktualisierungseinheit, die konfiguriert ist zum Aktualisieren des metrischen Modells auf der Grundlage des Ergebnisses der Singulärwertzerlegung, um ein aktualisiertes metrisches Modell zu erhalten;

eine Beurteilungseinheit, die konfiguriert ist zum: Bestimmen, ob das aktualisierte metrische Modell eine voreingestellte Trainingsabbruchbedingung erfüllt, erneutes Durchführen des Trainings ab dem Schritt des Optimierens einer Zielfunktion, die zu dem metrischen Modell korrespondiert, unter Verwendung des aktualisierten Trainingsprobensatzes, um eine optimierte Zielfunktion zu erhalten, wenn das aktualisierte metrische Modell die voreingestellte Trainingsabbruchbedingung nicht erreicht; und Beenden des Trainings, wenn das aktualisierte metrische Modell die voreingestellte Trainingsabbruchbedingung erfüllt.

9. Server mit einem Prozessor und einem Speicher, wobei der Speicher ein Computerprogramm speichert und das Computerprogramm vom Prozessor geladen und ausgeführt wird, um das Probenauswahlverfahren nach einem der Ansprüche 1 bis 4 zu implementieren.

10. Computerlesbares Speichermedium, das ein Computerprogramm speichert, wobei das Computerprogramm von einem Prozessor geladen und ausgeführt wird, um das Probenauswahlverfahren nach einem der Ansprüche 1 bis 4 zu implementieren.

## Revendications

1. Procédé de récupération de données à modalité croisée, appliqué à un serveur et comprenant :

    (i) l'acquisition d'un ensemble d'échantillons d'apprentissage par :

        sélection (101) de n paires d'échantillons à partir d'un ensemble d'échantillons non étiquetés, chaque paire d'échantillons comprenant deux échantillons, chaque échantillon comprenant des données dans p modalités, n étant un nombre entier positif et p étant un nombre entier supérieur à 1, les données dans les p modalités étant des données de différents types de données, qui comprennent une image et du texte, un audio et du texte, une vidéo et du texte ou une image et un audio, ou les données dans les p modalités étant des données de différents contenus de données, qui comprennent des données de pression artérielle, des données de glycémie, des données d'électrocardiogramme et/ou des données de poids,
        calcul (102) d'une similarité partielle entre des données dans chaque modalité d'un échantillon et des données dans chaque modalité de l'autre échantillon compris dans chacune des n paires d'échantillons afin d'obtenir pxp similarités partielles, les pxp similarités partielles calculées comprenant p similarités entre des données dans les mêmes modalités et pxp-p similarités entre des données à modalité croisée,
        calcul (103), sur la base des pxp similarités partielles, d'une similarité globale entre les deux échantillons compris dans la paire d'échantillons,
        obtention (104) d'un degré de différence entre les pxp similarités partielles et la similarité globale,
        sélection (105) d'un échantillon d'apprentissage à partir d'une paire d'échantillons qui satisfait à une condition prédéfinie parmi les n paires d'échantillons, la condition prédéfinie comprenant le fait que le degré de différence est supérieur à un premier seuil et que la similarité globale est inférieure à un deuxième seuil,
        obtention (106) d'une corrélation correspondant à l'échantillon d'apprentissage qui est étiqueté par un personnel d'étiquetage, la corrélation étant utilisée pour indiquer si deux échantillons compris dans l'échantillon d'apprentissage sont corrélés ou non et
        ajout (107) de l'échantillon d'apprentissage à un ensemble d'échantillons d'apprentissage,

    (ii) l'apprentissage (108) d'un modèle métrique à l'aide de l'ensemble d'échantillons d'apprentissage, le modèle métrique étant utilisé pour mesurer une corrélation entre deux objets, chaque objet comprenant des données dans au moins l'une des p modalités, le modèle métrique comprenant pxp sous-modèles métriques, chaque sous-modèle métrique étant utilisé pour calculer une similarité partielle pour une caractéristique de données dans une modalité d'un objet et pour une caractéristique de données dans une modalité de l'autre objet, et
    (iii) la récupération des données à modalité croisée par :

        réception d'informations de récupération entrées par un utilisateur, les informations de récupération comprenant des données dans l'une des p modalités, et
        récupération, sur la base des informations de récupération entrées par l'utilisateur et à l'aide du modèle métrique, de données à modalité croisée comprenant des données dans une autre des p modalités,

    (iv) la fourniture d'un résultat de récupération à l'utilisateur.

2. Procédé selon la revendication 1, la sélection d'un échantillon d'apprentissage à partir d'une paire d'échantillons qui satisfait à une condition prédéfinie parmi les n paires d'échantillons comprenant :

le calcul, sur la base de la similarité globale et du degré de différence de chacune des n paires d'échantillons, d'une quantité d'informations de la paire d'échantillons ; et

la sélection, parmi les n paires d'échantillons, d'une paire d'échantillons dont une quantité d'informations est supérieure à un troisième seuil en tant qu'échantillon d'apprentissage.

**3.** Procédé selon la revendication 1 ou 2, le calcul d'une similarité partielle entre des données dans chaque modalité d'un échantillon et des données dans chaque modalité de l'autre échantillon compris dans chacune des n paires d'échantillons afin d'obtenir pxp similarités partielles comprenant :

l'extraction d'une caractéristique à partir de données dans chaque modalité de chaque échantillon compris dans chacune des n paires d'échantillons ; et

le calcul des pxp similarités partielles sur la base d'une caractéristique des données dans chaque modalité d'un échantillon et d'une caractéristique des données dans chaque modalité de l'autre échantillon compris dans la paire.

**4.** Procédé selon la revendication 1, le modèle métrique étant entraîné à l'aide de l'ensemble d'échantillons d'apprentissage par :

initialisation (108a) du modèle métrique ;

optimisation (108b) d'une fonction objective correspondant au modèle métrique à l'aide de l'ensemble d'échantillons d'apprentissage afin d'obtenir une fonction objective optimisée ;

détermination (108c), sur la base de la fonction objective optimisée, d'une matrice augmentée correspondant au modèle métrique ;

réalisation (108d) d'une décomposition en valeurs singulières sur la matrice augmentée correspondant au modèle métrique afin d'obtenir un résultat de décomposition en valeurs singulières ;

mise à jour (108e) du modèle métrique sur la base du résultat de décomposition en valeurs singulières afin d'obtenir un modèle métrique mis à jour ;

détermination (108f) du fait que le modèle métrique mis à jour satisfait ou non à une condition d'arrêt d'apprentissage prédéfinie ; et

réalisation, à nouveau, d'un apprentissage à partir de l'étape d'optimisation d'une fonction objective correspondant au modèle métrique à l'aide de l'ensemble d'échantillons d'apprentissage mis à jour afin d'obtenir une fonction objective optimisée, si le modèle métrique mis à jour n'atteint pas la condition d'arrêt d'apprentissage prédéfinie, et

arrêt de l'apprentissage si le modèle métrique mis à jour satisfait à la condition d'arrêt d'apprentissage prédéfinie.

**5.** Appareil destiné à récupérer des données à modalité croisée, appliqué à un serveur et comprenant :

(i) une unité d'acquisition, configurée pour acquérir un ensemble d'échantillons d'apprentissage, comprenant :

un module de sélection (710), configuré pour sélectionner n paires d'échantillons à partir d'un ensemble d'échantillons non étiquetés, chaque paire d'échantillons comprenant deux échantillons, chaque échantillon comprenant des données dans p modalités, n étant un nombre entier positif et p étant un nombre entier supérieur à 1, les données dans les p modalités étant des données de différents types de données, qui comprennent une image et du texte, un audio et du texte, une vidéo et du texte, ou une image et un audio, ou les données dans les p modalités étant des données de différents contenus de données, qui comprennent des données de pression artérielle, des données de glycémie, des données d'électrocardiogramme et/ou des données de poids ;

un premier module de calcul (720), configuré pour calculer une similarité partielle entre des données dans chaque modalité d'un échantillon et des données dans chaque modalité de l'autre échantillon compris dans chacune des n paires d'échantillons afin d'obtenir pxp similarités partielles, les pxp similarités partielles calculées comprenant p similarités entre des données dans les mêmes modalités et pxp-p similarités entre des données à modalité croisée ;

un deuxième module de calcul (730), configuré pour calculer, sur la base des pxp similarités partielles, une similarité globale entre les deux échantillons compris dans la paire d'échantillons ;

un troisième module de calcul (740), configuré pour obtenir un degré de différence entre les pxp similarités partielles et la similarité globale ; et

un module de sélection (750), configuré pour sélectionner un échantillon d'apprentissage à partir d'une paire d'échantillons qui satisfait à une condition prédéfinie parmi les n paires d'échantillons, la condition prédéfinie comprenant le fait que le degré de différence est supérieur à un premier seuil et que la similarité globale est inférieure à un deuxième seuil ;

un module d'obtention, configuré pour obtenir une corrélation correspondant à l'échantillon d'apprentissage qui est étiqueté par un personnel d'étiquetage, la corrélation étant utilisée pour indiquer si deux échantillons compris dans l'échantillon d'apprentissage sont corrélés ou non ;

un module d'ajout, configuré pour ajouter l'échantillon d'apprentissage à un ensemble d'échantillons d'apprentissage ;

et

(ii) un module d'apprentissage, configuré pour entraîner un modèle métrique à l'aide de l'ensemble d'échantillons d'apprentissage, le modèle métrique étant utilisé pour mesurer une corrélation entre deux objets, chaque objet comprenant des données dans au moins l'une des p modalités, le modèle métrique comprenant pxp sous-modèles métriques, chaque sous-modèle métrique étant utilisé pour calculer une similarité partielle pour une caractéristique de données dans une modalité d'un objet et pour une caractéristique de données dans une modalité de l'autre objet et

(iii) une unité de récupération, configurée pour récupérer les données à modalité croisée, comprenant :

une unité de réception, configurée pour recevoir des informations de récupération entrées par un utilisateur, les informations de récupération comprenant des données dans l'une des p modalités,

un module de récupération, configuré pour récupérer, sur la base des informations de récupération entrées par l'utilisateur et à l'aide du modèle métrique, des données à modalité croisée comprenant des données dans une autre des p modalités,

(iv) une unité de fourniture, configurée pour fournir un résultat de récupération à l'utilisateur.

6. Appareil selon la revendication 5, le module de sélection comprenant :

une unité de calcul, configurée pour calculer, sur la base de la similarité globale et du degré de différence de chacune des n paires d'échantillons, une quantité d'informations de la paire d'échantillons ; et

une unité de sélection, configurée pour sélectionner, parmi les n paires d'échantillons, une paire d'échantillons dont une quantité d'informations est supérieure à un troisième seuil en tant qu'échantillon d'apprentissage.

7. Appareil selon la revendication 5 ou 6, le premier module de calcul comprenant :

une unité d'extraction, configurée pour extraire une caractéristique à partir de données dans chaque modalité de chaque échantillon compris dans chacune des n paires d'échantillons ; et

une unité de calcul, configurée pour calculer les pxp similarités partielles sur la base d'une caractéristique des données dans chaque modalité d'un échantillon et d'une caractéristique des données dans chaque modalité de l'autre échantillon compris dans la paire d'échantillons.

8. Appareil selon la revendication 5, le module d'apprentissage comprenant :

une unité d'initialisation, configurée pour initialiser le modèle métrique ;

une unité d'optimisation, configurée pour optimiser une fonction objective correspondant au modèle métrique à l'aide de l'ensemble d'échantillons d'apprentissage afin d'obtenir une fonction objective optimisée ;

une unité de détermination, configurée pour déterminer, sur la base de la fonction objective optimisée, une matrice augmentée correspondant au modèle métrique ;

une unité de décomposition, configurée pour effectuer une décomposition en valeurs singulières sur la matrice augmentée correspondant au modèle métrique afin d'obtenir un résultat de décomposition en valeurs singulières ;

une unité de mise à jour, configurée pour mettre à jour le modèle métrique sur la base du résultat de décomposition en valeurs singulières afin d'obtenir un modèle métrique mis à jour ;

une unité de jugement, configurée pour : déterminer si le modèle métrique mis à jour satisfait ou non à une condition d'arrêt d'apprentissage prédéfinie, l'apprentissage étant effectué, à nouveau, à partir de l'étape d'optimisation d'une fonction objective correspondant au modèle métrique à l'aide de l'ensemble d'échantillons d'apprentissage afin d'obtenir une fonction objective optimisée, si le modèle métrique mis à jour n'atteint pas la condition d'arrêt d'apprentissage prédéfinie ; et l'apprentissage étant arrêté si le modèle métrique mis à jour satisfait la condition d'arrêt d'apprentissage prédéfinie.

9. Serveur, comprenant un processeur et une mémoire, la mémoire stockant un programme informatique, le programme informatique étant chargé et exécuté par le processeur pour mettre en oeuvre le procédé de sélection d'échantillons selon l'une quelconque des revendications 1 à 4.

10. Support d'enregistrement lisible par ordinateur, stockant un programme informatique, le programme informatique étant chargé et exécuté par un processeur pour mettre en oeuvre le procédé de sélection d'échantillons selon l'une quelconque des revendications 1 à 4.

101

Select n sample pairs from an unlabeled sample set, each sample pair including two samples, each sample including data in p modalities, n being a positive integer, and p being an integer greater than 1

102

Calculate a partial similarity between data in each modality of one sample and data in each modality of the other sample included in each of the n sample pairs, to obtain p×p partial similarities

103

Calculate, based on the p×p partial similarities, an overall similarity between the two samples included in the sample pair

104

Obtain a degree of difference between the p×p partial similarities and the overall similarity

105

Select a training sample from a sample pair that meets a preset condition among the n sample pairs, the preset condition including that the degree of difference is greater than a first threshold and the overall similarity is less than a second threshold

**FIG. 1**

105

106

Obtain a correlation corresponding to a training sample that is labeled by a labeling personnel, the correlation corresponding to the training sample being used for indicating whether two samples included in the training sample are correlated

107

Add the training sample to a training sample set

108

Train a metric model by using the training sample set, the metric model being used for measuring a correlation between two objects, and each object including data in at least one modality

**FIG. 2**

Start

Initialize a metric model — 108a

Optimize an objective function corresponding to the metric model by using a training sample set, to obtain an optimized objective function — 108b

Determine, based on the optimized objective function, an augmented matrix corresponding to the metric model — 108c

Perform singular value decomposition on the augmented matrix corresponding to the metric model, to obtain a singular value decomposition result — 108d

Update the metric model based on the singular value decomposition result, to obtain an updated metric model — 108e

108f

Determine whether the updated metric model meets a preset training stopping condition

No

Yes

End

FIG. 3

Start

Establish an initial training sample set  401

Train a metric model by using the training sample set  402

Output the metric model  403

Verify accuracy of the metric model by using a verification sample set  404

Determine whether the accuracy of the metric model meets a requirement  405

No

Select a training sample of high quality from an unlabeled sample set by using an active learning technology, label, by a labeling personnel, the selected training sample based on a correlation, and add the labeled training sample to the training sample set  406

Yes

End

FIG. 4

Nanjing real
estate market

**Nanjing real
estate market**

**Function
introduction** Love real estate and reveal awesome news. There
are original articles herein that you cannot see on
newspapers and websites. There are inside stories
of real estate that most people cannot touch.
There are belles, comedies, hot comments, news
flash, and the like. This is an official account that
is elaborately maintained by a plurality of real
estate people in Nanjing and that provides
valuable information, viewpoints, and modes of
thinking for people. Big shots are here waiting for
you!

**Are the two official accounts are similar?** Yes √ No

Real estate
market of the
area north of
the Yangtze
River

**Real estate market of the
area north of the Yangtze
River**

**Function
introduction** Most authoritative and most convenient
information of the real estate market of the
new district of the area north of the Yangtze
River of Nanjing, and the first choice of
platform for buying houses and selling
houses in the area north of the Yangtze River

**FIG. 5**

← 🔍 **Nanjing real estate market** ✕

Official account

**Nanjing real estate market**

Nanjing real estate market

Love real estate and reveal awesome news. There are original articles herein that you cannot see on newspapers and websites. There are inside stories of real estate that most people cannot touch...

**Nanjing real estate market** ✓

Nanjing real estate market

Provide latest information of the Nanjing real estate market, policies and regulations related to the real estate market, interpret variations of the Nanjing real estate market, predict the future of the real estate market, and disclose... in the real estate market

**365 real estate market** ✓

365 real estate market

Most quickly publish information of the Nanjing real estate market! Search it to buy a house, and get a big bargain! Propose your questions about buying a house!

**FIG. 6**

710
| Selection module |

720
| First calculation module |

730
| Second calculation module |

740
| Third calculation module |

750
| Selection module |

**FIG. 7**

<u>800</u>

812

Network

806

808

Display

809

Input device

Input/output controller
810

801

Central processing
unit

811

Network interface
unit

805

System bus

804

802

Random access
memory

Read-only
memory

System
memory

803

807

813

Operating system

814

Application
program

Mass storage
device

815

Another program
module

**FIG. 8**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201710069595X

- US 20110072012 A1